# EUROPEAN PATENT SPECIFICATION

(11) **EP 3 219 469 B1**
(45) Date of publication and mention of the grant of the patent: **07.04.2021**
(21) Application number: 16185424.5
(22) Date of filing: 24.08.2016
(51) Int. Cl.: B29C 64/106, B29C 64/393, B33Y 30/00, B33Y 40/00, B33Y 50/02, B33Y 10/00, B29C 64/40

(54) **THREE DIMENSION FORMING APPARATUS, THREE DIMENSION FORMING METHOD AND THREE DIMENSION FORMING PROGRAM**
VORRICHTUNG ZUR DREIDIMENSIONALEN FORMUNG, VERFAHREN ZUR DREIDIMENSIONALEN FORMUNG UND PROGRAMM ZUR DREIDIMENSIONALEN FORMUNG
APPAREIL DE FORMATION EN TROIS DIMENSIONS, PROCÉDÉ DE FORMATION EN TROIS DIMENSIONS ET PROGRAMME DE FORMATION EN TROIS DIMENSIONS

(30) Priority: 18.03.2016 JP 2016056160
(43) Date of publication of application: 20.09.2017
(73) Proprietor: Fuji Xerox Co., Ltd., Minato-ku, Tokyo (JP)
(72) Inventor: TAKAHASHI, Tomonari, Ebina-shi, Kanagawa (JP); MORIKAWA, Takashi, Ebina-shi, Kanagawa (JP)
(74) Representative: Haseltine Lake Kempner LLP

(56) References cited:
- EP-A2- 1 637 307
- US-A- 5 740 051
- US-A1- 2010 009 133
- US-A1- 2015 137 423

## Description

### BACKGROUND

### (i) Technical Field

The present invention relates to a three dimension forming apparatus, a three dimension forming method, and a three dimension forming program.

### (ii) Related Art

Various technologies for forming a three-dimensional structure are known. For example, in a technology called rapid prototyping, based on the data of a standard triangulated language (STL) format in which the surface of a three-dimensional structure is described as a set of triangular polygons, a sectional shape sliced in the laminating direction of the three-dimensional structure is calculated, and each layer is formed according to the sectional shape, thereby forming the three-dimensional structure.

As the method of forming a three-dimensional structure, there are an inkjet method, an inkjet binder method, an optical fabrication method (SL: Stereo Lithography), a melt deposition method (FDM: fused deposition modeling), a powder sintering method (SLS: selective laser sintering), and the like.

In the inkjet method, a treatment for forming a model material layer by selectively ejecting a model material, such as a photocurable resin, from an inkjet head to a modeling platform and by curing the model material is repeated to laminate plural model material layers, thereby forming a three-dimensional structure. Further, in the inkjet method, a support material for supporting the model material during the formation of a three-dimensional structure is supplied to the modeling platform. In a case where there is an overhang portion, that is, a flared portion, in a three-dimensional structure, the support material mainly serves to support the overhang portion until the formation of the three-dimensional structure is completed, and is removed after the formation of the three-dimensional structure is completed. Further, the support material is used not only to support the overhang portion but also, in a case where the three-dimensional structure has a shape having a nearly vertical surface, such as a cube, for example, to protect the surface by preventing the dripping on the surface. Moreover, the support material is also used to cover and protect the model material in order to prevent the formation-completed portion from being degraded by excessive irradiation with UV light, in a case where a method of UV-curing of the model material is used in the formation of the three-dimensional structure.

As a technology for forming a three-dimensional structure, JP-A-2015-123687 discloses a method of forming a structure including a process of ejecting a model material to be formed into a structure and a support material to be formed into a support of the model material, in which the model material and the support material are ejected such that the density of the model material landed on an ejection object is higher than the density of the support material landed on the ejection object.

JP-A-2012-96430 discloses a three dimension forming apparatus, in which a model material to be finally formed into a structure and a support material to support the overhang portion of the model material and to be finally removed are ejected onto a modeling plate while scanning in at least one direction, an operation of curing the model material and the support material is repeated to form slices having a predetermined thickness in a height direction, and the slices are laminated in a height direction, thereby forming a structure, the apparatus including: a modeling material ejection unit in which a plurality of the modeling plates for placing a structure, a plurality of model material ejection nozzles for ejecting the model material, and a plurality of support material ejection nozzles for ejecting the support material are respectively arranged in one direction; a curing unit for curing the model material and the support material; a head unit provided with the modeling material ejection unit and the curing unit; a horizontal drive unit for reciprocally scanning the head unit in a horizontal direction; a vertical drive unit for moving the relative position between the modeling plate and the head unit in a height direction; and a control unit for controlling the driving of the horizontal drive unit and the vertical drive unit and for controlling the ejection of the modeling material through the modeling material ejection unit and the curing of the model material and the support material through the curing unit, in which the control unit allows the horizontal drive unit to reciprocally scan the head unit in one direction, allows the modeling material ejection unit to eject the model material and the support material onto the modeling plate, and allows the curing unit to cure the model material and/or the support material in at least any one of the forwarding path and returning path of the reciprocal scanning, so as to form slices, and then the relative position between the modeling plate and the head unit is moved in a height direction, and the lamination of the slices is repeated, thereby forming a structure, and in which the ejection amount of the support material is larger than the ejection amount of the model material, and the resolution of the support material is lower than the resolution of the model material.

JP-A-2015-139957 discloses a three dimension forming apparatus including: a modeling stage in which a plurality of modeling material layers each having a first modeling material region made of a first energy-curable modeling material and a second modeling material layer region made of a second energy-curable modeling material being in contact with the first modeling material during the formation of a structure and being removed after the formation of a structure are laminated; a first modeling material region forming unit that forms the first modeling material region by ejecting the first modeling material; a second modeling material region forming unit that forms the second modeling material region by ejecting the second modeling material; an energy applying device that applies energy for curing at least one region of the first modeling material region and the second modeling material region; and a control unit that controls at least the energy applying device, in which the control unit changes the amount of energy applied to one region of the first modeling material region and the second modeling material region before forming the other region thereof after forming the one region thereof, thereby adjusting the mixing degree of the first model material and the second modeling material at an interface between the first modeling material region and the second modeling material region, the interface being formed when the other region is formed.

EP1637307A2 discloses an apparatus for three-dimensional printing in consecutive layers comprising a printing head for dispensing a modeling material and a support material and a controller to control building of a three-dimensional object and an adjacent support construction, where the three dimensional object comprises predominantly modeling material and the support construction comprises predominantly support material. The support structure may take the form of a grid construction of support material reinforced by discrete modeling material elements or areas, and may be constructed by constructing continuous support material layers reinforced by continuous columns, bars, or pillars of modeling material.

US5740051A discloses a 3D printer which forms a support structure made of high melting point material sectioned by layers or webs of a low melting point material, to facilitate removal of the support structure after the low melting point material is melted.

### SUMMARY

An object of the present invention is to achieve both the control of deterioration in strength of the support structure and the ease of removal of the support structure, compared to the case where only the support material is used as the support structure supporting the three-dimensional structure.

The invention is defined in the independent claims 1, 4 and 5, reference to which should now be made.

### BRIEF DESCRIPTION OF DRAWINGS

The disclosure will be described in detail based on the following figures, wherein:
Fig. 1 is a block diagram of a three dimension forming apparatus;
Fig. 2 is a side view of the three dimension forming apparatus;
Fig. 3 is a flowchart of processing to be executed by a controller according to a first exemplary embodiment;
Fig. 4 is a side view of a three-dimensional structure;
Fig. 5 is a view for illustrating a section of the three-dimensional structure;
Fig. 6 is a view showing an example of a sectional image;
Fig. 7 is a view for illustrating a section of the three-dimensional structure;
Fig. 8 is a view showing an example of a sectional image;
Fig. 9 is a view for illustrating a section of the three-dimensional structure;
Fig. 10 is a view showing an example of a sectional image;
Fig. 11 is a view for illustrating a region needing a support structure;
Fig. 12 is a view for illustrating a region needing a support structure;
Figs. 13A to 13C are views showing an example of an arrangement pattern of a model material and a support material (Figs. 13a and 13c do not form part of the claimed invention)
Fig. 14 is a view showing an example of an arrangement pattern of a model material and a support material in a height direction (not a part of the claimed invention)
Fig. 15 is a view showing an example of an arrangement pattern of a model material and a support material in a height direction;
Fig. 16 is a flowchart of processing to be executed by a controller according to a second exemplary embodiment;
Fig. 17 is a view for illustrating the prediction of a support structure;
Figs. 18A and 18B are views for illustrating a projection region of a three-dimensional structure;
Fig. 19 is a view showing an example of the division of the projection region;
Fig. 20 is a view showing an example of a support structure with respect to each block;
Fig. 21 is a view showing an example of a support structure with respect to each block;
Fig. 22 is a view showing a resolution pattern for scanning by a three dimension forming apparatus in Examples, the resolution pattern having a modeling pattern in which square projections are arranged in a non-claimed grid pattern; and
Fig. 23 is a view showing the results of experiments on the viscosity adjustment of a support material.

### DETAILED DESCRIPTION

### (First exemplary embodiment)

Hereinafter, the present exemplary embodiment will be described in detail with reference to the drawings.

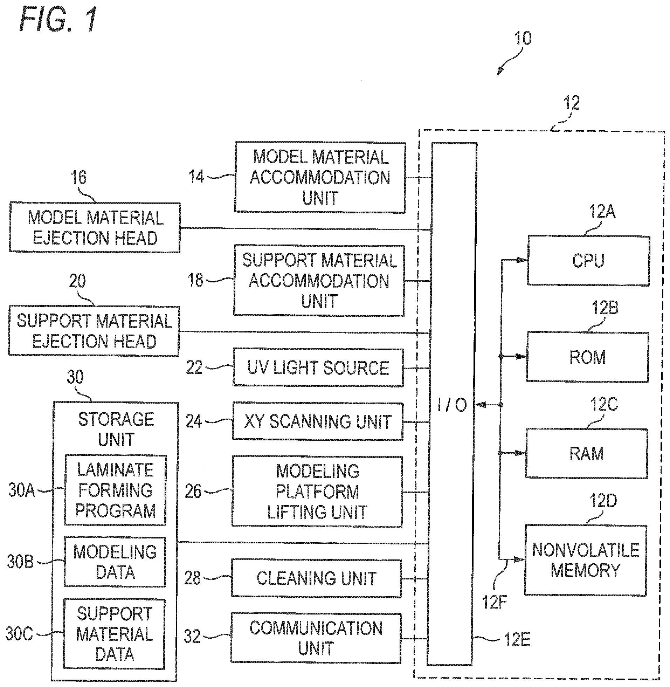

Fig. 1 is a block diagram of a three dimension forming apparatus 10 according to the present exemplary embodiment. As shown in FIG. 1, the three dimension forming apparatus 10 is configured to include a controller 12.

The controller 12 is configured such that a central process unit (CPU) 12A, read only memory (ROM) 12B, random access memory (RAM) 12C, and non-volatile memory 12D are respectively connected with an input/output interface (I/O) 12E through a bus 12F.

The I/O 12E is connected with function units, such as a model material accommodation unit 14, a model material ejection head 16, a support material accommodation unit 18, a support material ejection head 20, a UV light source 22, an XY scanning unit 24, a modeling platform lifting unit 26, a cleaning unit 28, a storage unit 30, and a communication unit 32.

The model material accommodation unit 14 accommodates a model material for forming a three-dimensional structure. The model material is composed of a UV-curable resin having a property of being cured by the irradiation with ultraviolet (UV) light, that is, ultraviolet rays.

A detailed description of the model material will be described later.

The model material ejection head 16 ejects the model material supplied from the model material accommodation unit 14 by an inkjet method in accordance with an instruction from the CPU 12A.

The support material accommodation unit 18 accommodates a support material for supporting or protecting a three-dimensional structure. The support material is used to support the overhang portion (flared portion) of a three-dimensional structure until the formation of the three-dimensional structure is completed, and is removed after the formation of the three-dimensional structure is completed. Further, for example, in the case where the three-dimensional structure, similarly to a cube, has a shape having a nearly vertical surface, the support material is used to protect the surface by preventing the dripping of the surface. Moreover, the support material is also used to cover and protect the model material in order to prevent a three-dimensional structure from being degraded by the irradiation with UV light. The support material, similarly to the model material, is composed of a UV-curable resin having a property of being cured by the irradiation with UV light.

A detailed description of the support material will be described later.

The support material ejection head 20 ejects the support material supplied from the support material accommodation unit 18 by an inkjet method in accordance with an instruction from the CPU 12A.

A piezo-type (piezoelectric type) ejection head in which droplets of each material are ejected by pressure is applied to each of the model material ejection head 16 and the support material ejection head 20. Each of the ejection heads is not limited thereto as long as it is an inkjet type ejection head, and may be an ejection head in which each material is ejected by pressure generated by a pump.

When the support material is ejected from the support material ejection head 20, the support material is heated to 40°C to 90°C (preferably, 45°C to 80°C, and more preferably 50°C to 75°C).

Even when the model material is ejected from the model material ejection head 16, it is preferable that the heating temperature of the model material is within the same range as above.

The UV light source 22 irradiates the model material ejected from the model material ejection head 16 and the support material ejected from the support material ejection head 20 with UV light to cure the model material and the support material. The UV light source 22 is selected depending on the kinds of the model material and the support material. As the UV light source 22, for example, a device having a light source, such as a metal halide lamp, a high-pressure mercury lamp, an ultrahigh-pressure mercury lamp, a deep ultraviolet lamp, a lamp exciting a mercury lamp without electrode from the outside using microwaves, an ultraviolet laser, a xenon lamp, or UV-LED, is applied.

An electron beam irradiation device may be used instead of the UV light source 22. As the electron beam irradiation device, for example, a scanning type, curtain type or plasma discharge type electron beam irradiation device is exemplified.

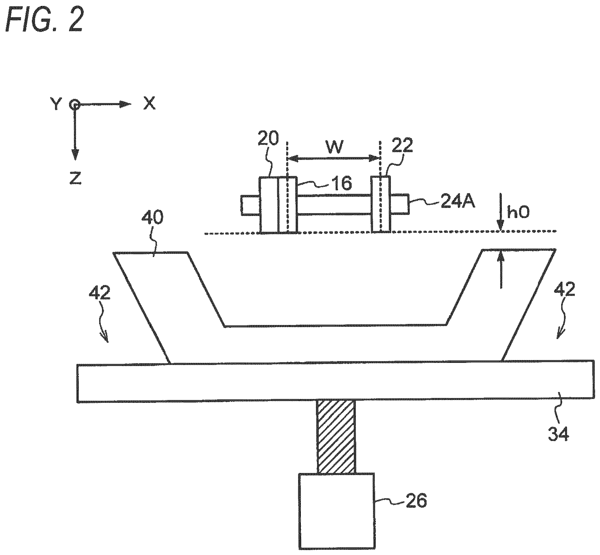

As shown in Fig. 2, the model material ejection head 16, the support material ejection head 20, and the UV light source 22 are mounted on a scanning axis 24A provided with the XY scanning unit 24. The model material ejection head 16 and the UV light source 22 are mounted on the scanning axis 24A to be spaced apart from each other by a predetermined distance W. The support material ejection head 20 is mounted on the scanning axis 24A to be adjacent to the model material ejection head 16. The position of the model material ejection head 16 and the position of the support material ejection head 20 may be reversed. That is, in Fig. 2, the model material ejection head 16 faces the side of the UV light source 22, but the support material ejection head 20 may face the side of the UV light source 22.

The XY scanning unit 24 drives the scanning axis 24A such that the model material ejection head 16, the support material ejection head 20, and the UV light source 22 move in X and Y directions, that is, are scanned on a XY plane.

The modeling platform lifting unit 26 lifts a modeling platform 34 shown in Fig. 2 in a Z-axis direction. The CPU 12A, at the time of forming a three-dimensional structure, controls the model material ejection head 16, the support material ejection head 20, and the UV light source 22 such that the model material and the support material are ejected onto the modeling platform 34, and the ejected model material and support material are irradiated with UV light. Further, the CPU 12A controls the XY scanning unit 24 such that the model material ejection head 16, the support material ejection head 20, and the UV light source 22 are scanned on the XY plane, and controls the modeling platform lifting unit 26 such that the modeling platform 34 gradually descends in the Z-axis direction.

The CPU 12A, at the time of forming a three-dimensional structure, controls the modeling platform lifting unit 26 such that the distance from the model material ejection head 16, the support material ejection head 20, and the UV light source 22 to a three-dimensional structure 40 on the modeling platform 34 in the Z-axis direction is a predetermined distance h0 or more in order for the model material ejection head 16, the support material ejection head 20, and the UV light source 22 not to be in contact with three-dimensional structure 40 on the modeling platform 34.

The cleaning unit 28 has a function of performing a cleaning by sucking the materials adhered to the nozzles of the model material ejection head 16 and the support material ejection head 20. For example, the cleaning unit 28 is provided in a save area outside the scanning range of the model material ejection head 16 and the support material ejection head 20, and performs a cleaning by saving the model material ejection head 16 and the support material ejection head 20 in the save area at the time of performing the cleaning.

The storage unit 30 stores a three dimension forming program 30A, modeling data 30B, and support material data 30C, which will be described later.

The CPU 12A reads the three dimension forming program 30A stored in the storage unit 30. Further, the CPU 12A records the three dimension forming program 30A in a recording medium, such as CD-ROM, and may execute the recorded three dimension forming program 30A by reading this program by a CD-ROM drive.

The communication unit 32 is an interface for performing data communication with an external device outputting the modeling data 30B of a three-dimensional structure.

The CPU 12A controls the respective function units in accordance with the modeling data 30B transmitted from the external device, thereby forming a three-dimensional structure.

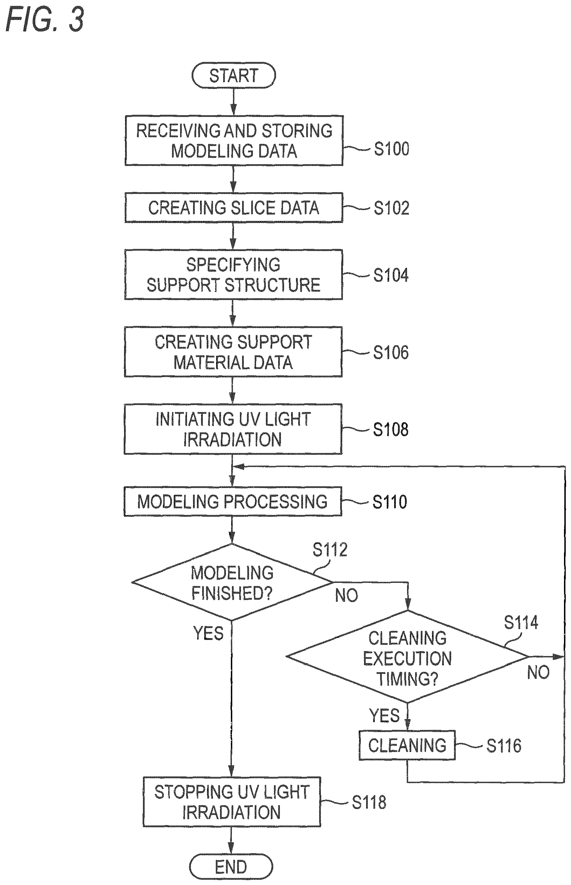

Next, operations of the present exemplary embodiment will be described. Fig. 3 shows a flowchart of the three dimension forming program 30A to be executed by the CPU 12A. The processing in Fig. 3 is executed when the formation of a three-dimensional structure is instructed from the external device.

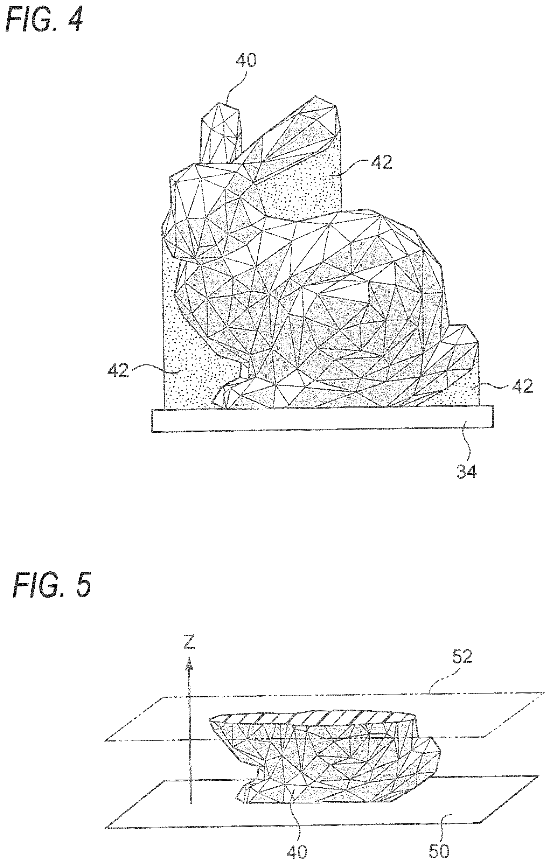

Further, hereinafter, a case of forming a three-dimensional structure 40 as shown in Fig. 4 will be described as an example. As shown in Fig. 4, the three-dimensional structure 40 has a rabbit shape.

In step 100 (S100), modeling data 30B of the three-dimensional structure 40 are received from an external device, and the received modeling data 30B are stored in the storage unit 30. As the format of the modeling data 30B of the three-dimensional structure 40, for example, a standard triangulated language (STL) format, which is a format of data expressing a three-dimensional shape, is used. Therefore, the three-dimensional structure 40 shown in Fig. 4 is expressed as a set of triangular polygons. The format of data expressing a three-dimensional shape is not limited to STL, and other formats may be used.

In step 102 (S102), lamination data (slice data) of the three-dimensional structure 40 are created in accordance with the modeling data 30B received in step 100 (S100). Specifically, a slice plane, which is parallel to a ground plane (XY plane) in which the three-dimensional structure 40 is grounded to the modeling platform 34, is shifted in a height direction (Z-axis direction) for each predetermined lamination pitch, and the intersection point of the slice plane and the polygons is determined, thereby creating slice data expressing the sectional image of the three-dimensional structure 40 in the slice plane. Such slice data are created for each sectional image sliced to the height of the three-dimensional structure 40 for each predetermined lamination pitch.

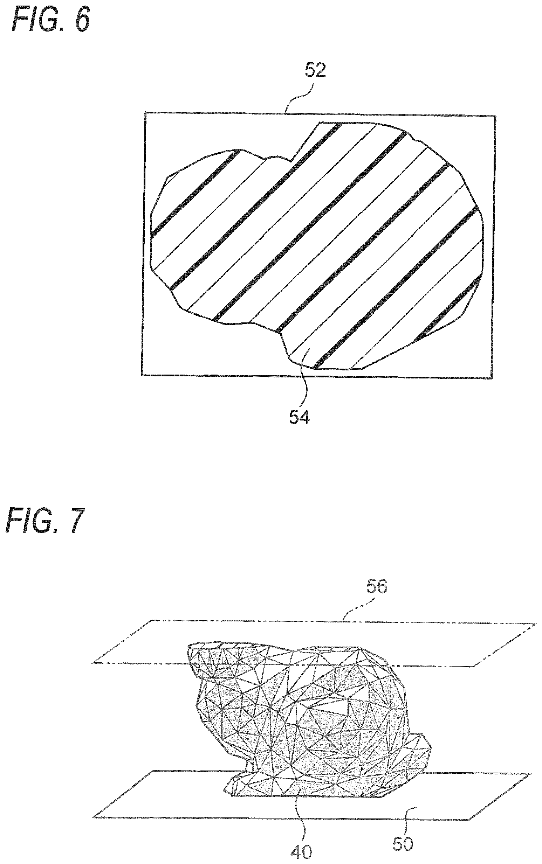

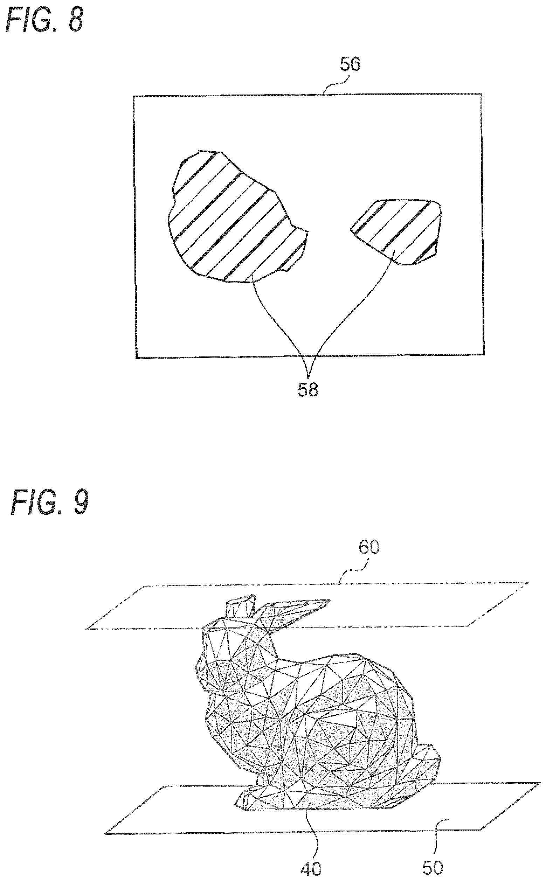

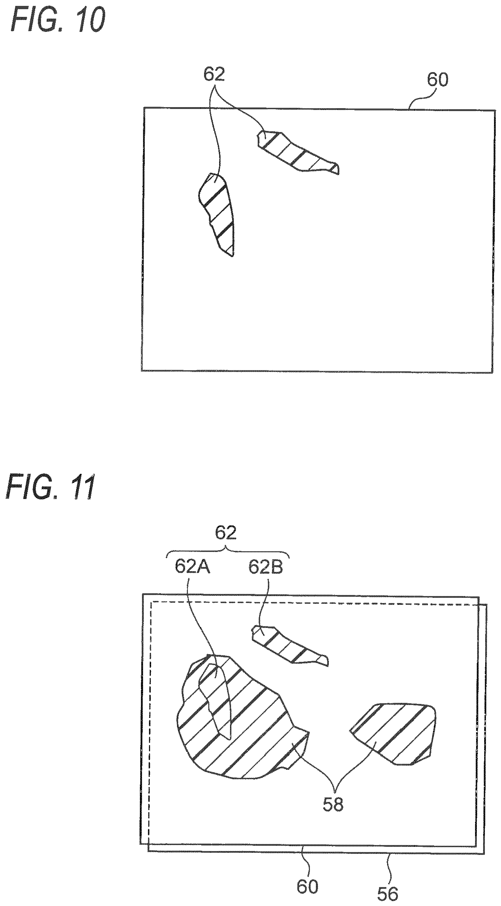

For example, as shown in Fig. 5, the sectional image in the slice plane 52 parallel to the ground plane 50 becomes a sectional image 54 as shown in Fig. 6. Further, for example, as shown in Fig. 7, the sectional image in the slice plane 56 parallel to the ground plane 50 becomes a sectional image 58 as shown in Fig. 8. Moreover, for example, as shown in Fig. 9, the sectional image in the slice plane 60 parallel to the ground plane 50 becomes a sectional image 62 as shown in Fig. 10.

In step 104 (S104), a support structure necessary for supporting the three-dimensional structure 40 is determined based on the slice data of each layer of the three-dimensional structure 40 created in the step 102 (S102).

Although the three-dimensional structure 40 is formed by sequentially laminating the model material on the modeling platform 34, in the case where, for example, as the lower portion of a rabbit ear shown in Fig. 4, a portion in which the lower side of the three-dimensional structure 40 becomes a space, so called, an overhang portion exists, there is a need to support the overhang portion from under. Therefore, a support structure 42, which is a space under the overhang portion, is determined based on the slice data of each layer.

Specifically, for example, slice data of two adjacent layers, from the uppermost layer in order, are referred. A region in which there is a three-dimensional structure 40 in the upper layer of the two adjacent layers, or a region which is determined to require a support material 68 is set to a first region, and a region, in which there is no three-dimensional structure 40 in the lower layer of the two adjacent layers and which correspond to the first region, is set to a second region (the same region as the first region in the XY plane). In this case, in order to support the first region of the upper layer, the first region is determined to need the support material 68. This determination is sequentially performed from the uppermost layer to the lowermost layer in this order.

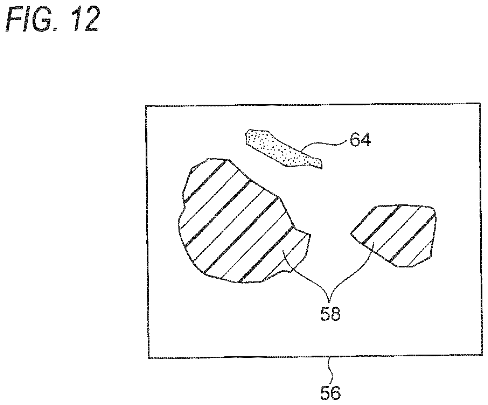

For example, as shown in Fig. 11, if it is assumed that the slice plane 56 (hereinafter, referred to as "a lower layer 56") shown in Fig. 7 and the slice plane 60 (hereinafter, referred to as "an upper layer 60") shown in Fig. 9 are adjacent layers, when the sectional images of the respective layers are superimposed in the Z-axis direction, an image shown in Fig. 11 is obtained. At this time, the region directly under the sectional image 62B (first region) of the upper layer 60, that is, the region (second region) corresponding to the sectional image 62B of the lower layer 56 becomes a region in which the three-dimensional structure 40 does not exist. Therefore, as shown in Fig. 12, the region 64 corresponding to the sectional image 62B of the lower layer 56 is determined as a region needing the support material 68. Incidentally, in the region corresponding to the sectional image 62A of the lower layer 56, since this region is a region overlapping the sectional image 58 of the lower layer 56, that is, a region in which the model material exists in the upper layer, this region is determined as a region not needing the support material 68. Such determination is sequentially performed from the uppermost layer to the lowermost layer in this order. Thus, the support structure 42 needing the support material 68, as shown in Fig. 4, is determined.

In step 106 (S106), support material data 30C of the support structure 42 determined in step 104 (S104) are created. Since the support structure 42 is required to be removed after the entire forming including the support structure 42 is completed, the support structure 42 is made of a material which is easily crushed, water-dissolved and hot-melted compared to the model material. Thus, since the support material has low density and strength compared to those of the model material, there is a possibility that cannot support a heavy body portion located thereon. Further, since the support material has a high volume contraction rate, there is a case where the shape of the support structure 42 is varied over time.

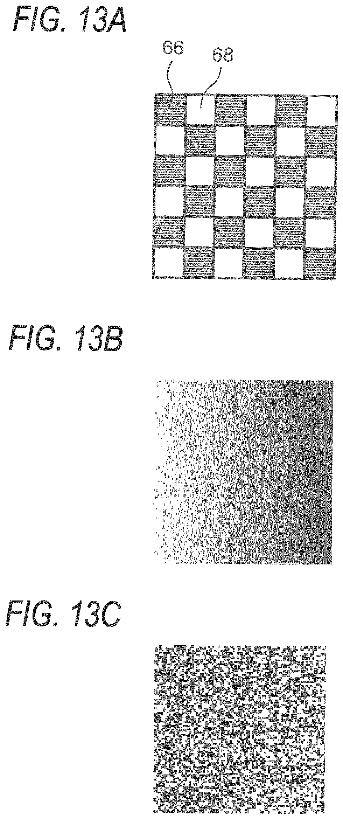

In the present exemplary embodiment, in the case where the support structure 42 is viewed as a section parallel to the XY plane, the support material data 30C are created such that the model material and the support material are disposed in an arrangement pattern containing the model material and the support material. In a non-claimed example, as shown in Fig. 13A, the arrangement pattern is set to a grid-like pattern in which the model materials 66 and the support materials 68 are alternately arranged. In this case, it is preferable that the model materials 66 and the support materials 68 are uniformly arranged. Further, the size of the model material 66 in one grid may be set to the size of the minimum unit that can be ejected through the model material ejection head 16, and may also be set to be a certain degree of size. Further, the shapes of all the model materials 66 may not be the same as each other. In addition, the support materials 68 are also the same as the model materials 66 in the above characteristics.

As such, in the case where the model materials 66 as well as the support materials 68 are arranged in the support structure 42, both prevention of decrease in strength of the support structure 42 and ease of removal of the support structure 42 are realized, compared to in the case where only the support materials 68 are arranged in the support structure 42. Further, the volume contraction rate is lowered, thereby preventing the shape of the support structure 42 from being varied over time.

The arrangement pattern, as shown in Fig. 13B, is set to a gradation-like arrangement pattern. In this case, according to being close to the three-dimensional structure 40, the rate of the support material 68 in the support structure 42 (the amount of the support material 68 per unit area) increases, and, according to being distant from the three-dimensional structure 40, the rate of the model material 66 in the support structure 42 (the amount of the model material 66 per unit area) increases. Therefore, according to being close to the three-dimensional structure 40, the strength of the support structure 42 decreases, and thus the stripping of the support structure from the three-dimensional structure 40 becomes easy. Further, according to being distant from the three-dimensional structure 40, the strength of the support structure 42 increases, so that it is easy to support the three-dimensional structure 40 formed on the support structure detached in a height direction, and it is possible to prevent the shape of the support structure 42 from being varied over time due to volume contraction. Accordingly, both prevention of decrease in strength of the support structure 42 and ease of removal of the support structure 42 are more effectively realized. Further, the variation of the shape of the support structure 42 over time is prevented.

The change of the rate of the support material 68 (the change of the amount of the support material 68 per unit area) may be arbitrarily set. For example, the change thereof may be constant, and is also increased according to being close to the three-dimensional structure 40 and be decreased according to being distant from the three-dimensional structure 40.

In another non-claimed example, as shown in Fig. 13C, may be set to a random arrangement pattern. In this case, the arrangement of the model materials 66 and the support materials 68 in the support structure 42 is randomly determined. The random density may be changed for each region of the support structure 42.

As such, the support material data 30C are created such that the model materials 66 and the support materials 68 are arranged in the support structure 42 in the arrangement pattern containing the model materials 66 and the support materials 68, and the created support material data 30C are stored in the storage unit 30.

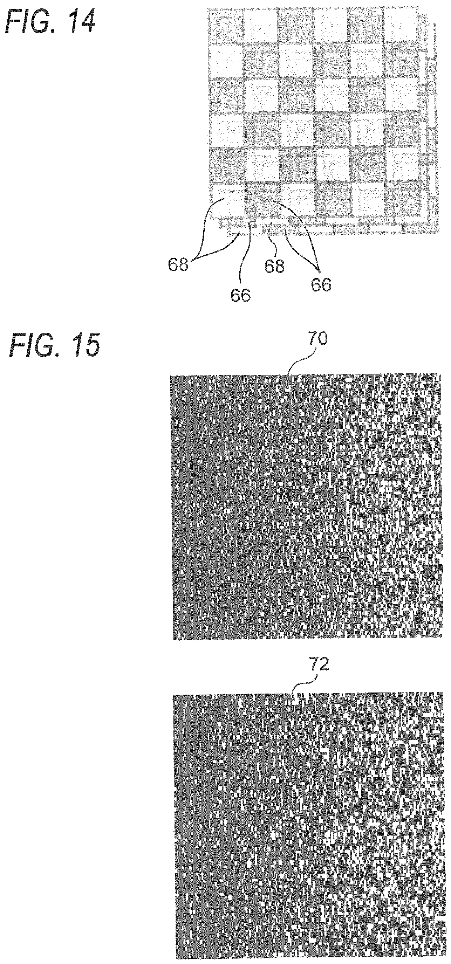

In the case where the arrangement pattern of the model materials 66 and the support materials 68 is set to the grid-like arrangement pattern as shown in Fig. 13A, it is preferable that, as shown in Fig. 14, the arrangement pattern of each layer in the support structure 42 is set such that the model materials 66 and the support materials 68 are alternately arranged even in a height direction (laminating direction).

As such, in the case where the arrangement of the model materials 66 and the support materials 68 is a clear arrangement pattern, it is preferable that the arrangement pattern is set such that the model materials 66 and the support materials 68 are not continuously arranged in a height direction, respectively.

Even in the case where the arrangement pattern of the model materials 66 and the support materials 68 is set to the gradation-like arrangement pattern as shown in Fig. 13B or in the case where the arrangement pattern thereof is set to the random arrangement pattern as shown in Fig. 13C, it is preferable that the arrangement pattern of each of layer in the support structure 42 is set such that the model materials 66 and the support materials 68 are not continuously arranged as much as possible in a height direction, respectively. For example, as shown in Fig. 15, the arrangement pattern of each layer is set such that different arrangement patterns 70 and 72 are adjacent to each other. In this case, for example, the model materials 66 and the support materials 68 may not be continuously arranged as much as possible in the height direction, respectively, by changing random seed or random algorithm used when setting the gradation-like arrangement pattern or the random arrangement pattern or by performing three-dimensional error diffusion or mask processing.

In a further non-claimed example the arrangement pattern of the model materials 66 and the support materials 68 may be arbitrarily set by a user. In this case, for example, the user specifies an arrangement pattern in which the model materials 66 are arranged in the support materials 68 in any shape of column, ladder, and spiral.

The creation of the support material data 30C may be performed while creating the slice data.

In the example of Fig. 4, a case where the support structure 42 exists directly under the model material is shown, but the support material data 30C may be created such that the support structure 42 becomes a support structure having a flared shape toward a lower side as well as directly under the model material.

For example, there is a case where fused deposition modeling (FDM) is used as a lamination method or a case where self-supporting is possible depending on the strength of the material even without the support structure directly under the model material. In this case, the support material data 30C may be created such that the support structure is omitted to some degree.

Even in the case of a cube which does not geometrically need a support structure, in the case where the dripping of the model material occurs, there is a case where the precision of the surface of a three-dimensional structure is deteriorated. Therefore, even when a support structure is not geometrically needed, the support material data 30C may be created such that a support structure is formed around a three-dimensional structure.

In step 108 (S108), an instruction for initiating the irradiation with UV light is transmitted to the UV light source 22. Thus, the UV light source 22 initiates the irradiation with UV light.

In step 110 (S110), modeling processing is executed. That is, the XY scanning unit 24 is controlled such that the model material ejection head 16 and the support material ejection head 20 scan the XY plane, the modeling platform lifting unit 26 is controlled such that the modeling platform 34 gradually descends in the Z-axis direction, the model material ejection head 16 is controlled such that the model material is ejected in accordance with the slice data created in step 102 (S102), and the support material ejection head 20 is controlled such that the support material is ejected in accordance with the support material data 30C created in step 106 (S106).

In step 112 (S112), it is determined whether or not the formation of the three-dimensional structure 40 and the support structure 42 is completed. If the formation thereof is not completed, step 114 (S114) proceeds, and if the formation thereof is completed, step 118 (S118) proceeds.

In step 114 (S114), it is determined whether or not the timing of performing the cleaning of the model material ejection head 16 and the support material ejection head 20 comes. If the timing of performing the cleaning thereof comes, step 116 (S116) proceeds. Meanwhile, if the timing of performing the cleaning thereof does not come, step 110 (S110) proceeds, and the modeling processing continues.

As the timing of performing the cleaning thereof, for example, each time a predetermined period elapses and each time at least one of the model material and the support material consumes a predetermined amount are exemplified. However, the timing of performing the cleaning thereof is not limited thereto.

In the case where the timing of performing the cleaning thereof is set to each time a predetermined period elapses, it is preferable that the clogging state of the head is measured by variously changing the period, and the longest period of the periods during which the clogging of the head does not occur is set as the timing of performing the cleaning thereof. The reason for this is that, as the period becomes shorter, the number of times of cleaning increases, and thus the time taken to complete the modeling processing becomes longer. Therefore, the unnecessary execution of the cleaning is prevented.

In step 116 (S116), an instruction is transmitted to the XY scanning unit 24 so as to move the model material ejection head 16 and the support material ejection head 20 to a save area, and an instruction is transmitted to the cleaning unit 28 so as to perform the cleaning of the model material ejection head 16 and the support material ejection head 20. Thus, the model material ejection head 16 and the support material ejection head 20 are moved to the save area, and the cleaning unit 28 cleans the model material ejection head 16 and the support material ejection head 20. Meanwhile, in the case where the timing of performing the cleaning thereof is set to each time at least one of the model material and the support material consumes a predetermined amount, only the head ejecting the material having been consumed in the predetermined amount may be cleaned.

In step 118 (S118), an instruction for stopping the irradiation with UV light is transmitted to the UV light source 22. Thus, the UV light source 22 stops the irradiation with UV light.

As described above, in the present exemplary embodiment, since the model materials as well as the support materials are arranged in the support structure supporting the three-dimensional structure, both the maintenance of strength of the support structure and the ease of removal of the support structure are realized, compared to in the case where only the support material is used in the support structure. In addition, the shape change over time is prevented by the maintenance of strength of the support structure.

### (Second exemplary embodiment)

Hereinafter, the second exemplary embodiment of the present invention will be described. In the present exemplary embodiment, a case of performing modeling processing while creating slice data and support material data 30C will be described. Since the apparatus configuration is the same as that of the first exemplary embodiment, a description thereof will be omitted.

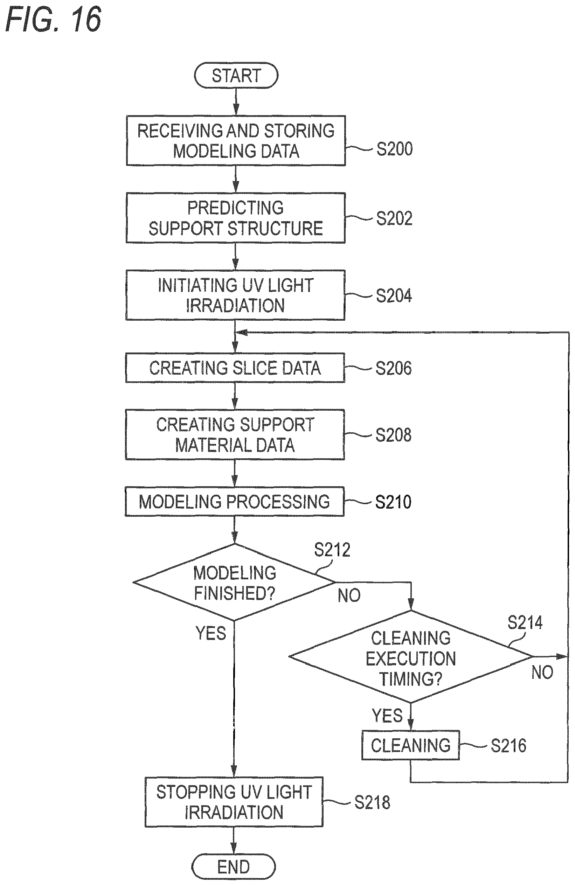

Next, operations of the present exemplary embodiment will be described. Fig. 16 shows a flowchart of the three dimension forming program 30A to be executed by the CPU 12A. The processing in Fig. 16 is executed when the formation of a three-dimensional structure is instructed from the external device.

First, in step 200 (S200), similarly to step 100 (S100) of Fig. 3, modeling data 30B of the three-dimensional structure 40 are received from an external device, and the received modeling data 30B are stored in the storage unit 30.

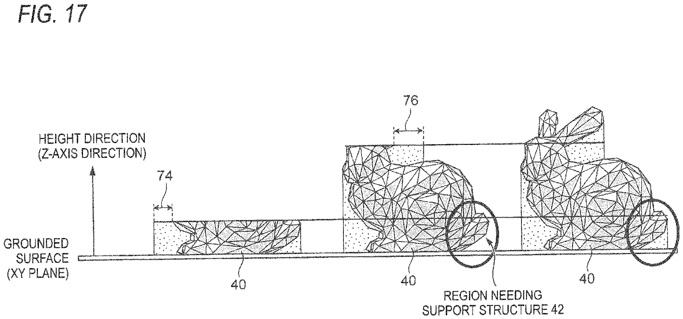

In step 202 (S202), a region needing the support structure is predicted. As shown in Fig. 17, although the formation of the three-dimensional structure 40 is performed by sequentially laminating the model materials from the grounded surface in the height direction, even in the case where the support structure is not needed up to the height at the modeling time, there is a case where the support structure for supporting the three-dimensional structure is needed in the step of advancing the modeling. For example, as shown in Fig. 17, regions 74 and 76 in the XY plane do not need the support structure at the time of performing the modeling to the height thereof, but it is needed to provide the support structure to the height at which the three-dimensional structure appears because the three-dimensional structure appears with the proceeding of the modeling. Therefore, in the present exemplary embodiment, before the initiation of modeling, the region needing the support structure is predicted.

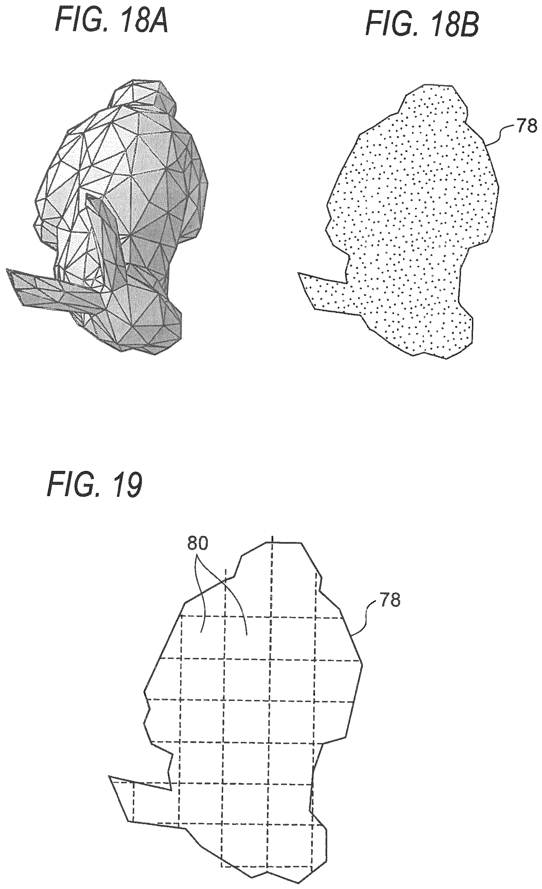

Specifically, the projection region in the XY plane at the time of projecting the three-dimensional structure 40 in the height direction is obtained based on the modeling data 30B. In the case of looking down the three-dimensional structure 40 shown in Fig. 4 directly from above in the height direction, the three-dimensional structure 40 is seen as in Fig. 18A. Thus, the projection region in the XY plane is a projection region 78 as shown in Fig. 18B. Therefore, the inside of the projection region 78 is set to a region needing the support structure.

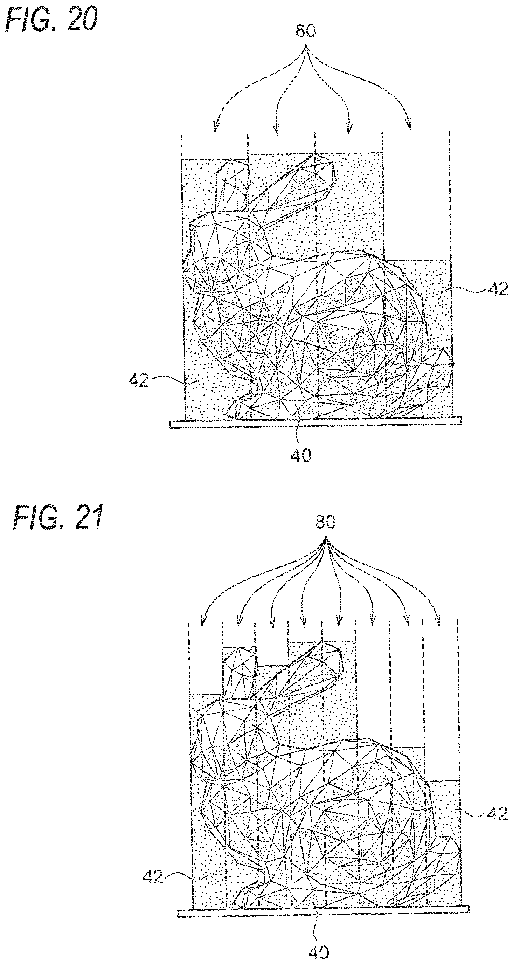

Next, as shown in Fig. 19, the projection region 78 is divided into a plurality of blocks 80. Then, the maximum value of the height direction is obtained for each block, and the support structure is defined up to the obtained maximum value. Accordingly, it is possible to prevent the support structure from being unnecessarily formed. Fig. 20 shows an example of a case where the support structure 42 is defined up to the obtained maximum value in the height direction for each block. Further, Fig. 21 shows an example of a case where a large number of blocks 80 exist compared to the case of Fig. 20.

As shown in Fig. 21, with the increase in the number of blocks 80, the effect of reducing the unnecessary support structure 42 is increased. For example, the support structure 42 is set to requisite minimum. That is, in the case where the unnecessary support structure is set to 0, it is required to process all the pixels included in the projection region 78 while regarding these pixels as the blocks, but processing time increases. Meanwhile, when the number of the blocks 80 is too small, processing time decreases, but the unnecessary support structure 42 increases. Therefore, the number of the blocks 80 is set in consideration of balance between the processing time and the reduction of the unnecessary support structure 42.

For example, less one of the number of pixels included in the projection region 78 and the number of layers (the number of slice data) obtained by dividing the height of the three-dimensional structure 40 by lamination pitch may be set as the number of the blocks 80.

In step 204 (S204), similarly to step 108 (S108) of Fig. 3, an instruction for initiating the irradiation with UV light is transmitted to the UV light source 22.

In step 206 (S206), similarly to step 102 (S102) of Fig. 3, lamination data (slice data) of the three-dimensional structure 40 are created.

In step 208 (S208), similarly to step 106 (S106) of Fig. 3, the support material data 30C of the support structure 42, predicted in step 202 (S202), are created.

Since steps 210 to 218 (S210 to S218) are the same as steps 110 to 118 (S10 to S118) of Fig. 1, descriptions thereof will be omitted.

As described above, in the present exemplary embodiment, since the modeling processing is performed while creating the slice data and the support material data 30C, the modeling time of the three-dimensional structure 40 is decreased. Further, similarly to the first exemplary embodiment, since the model materials as well as the support materials are arranged in the support structure supporting the three-dimensional structure, both the maintenance of strength of the support structure and the ease of removal of the support structure are realized, compared to in the case where only the support material is used in the support structure. In addition, the shape change over time is prevented by the maintenance of strength of the support structure.

In the case where the number of layers is equal to or more than the number of pixels included in the projection region 78, that is, in the case where the height of the three-dimensional structure 40 is relative high, the modeling processing of the present exemplary embodiment may be performed. Further, in the case where the number of layers is less than the number of pixels included in the projection region 78, that is, in the case where the height of the three-dimensional structure 40 is relative low, the modeling processing having been described in the first exemplary embodiment may be performed.

### (Support material)

Hereinafter, the support material will be described in detail.

The support material is a support material for an inkjet method. The support material contains a hot water-soluble radiation-curable compound and at least one polyglycerin-based compound selected from the group consisting of fatty acid esters of polyglycerin, ethylene oxide adducts of polyglycerin, and polypropylene oxide adducts of polyglycerin.

Here, the "hot water solubility" means that the compound cured after irradiation with radioactive rays exhibits solubility in hot water of at least 40°C to 90°C. Further, the "solubility" means that, when the cured compound is dipped into the hot water of the above temperature range, the compound is dissolved in the hot water to express fluidity, and the shape of the compound at the time of curing is not maintained.

Further, the hot water in the present specification refers to water of the above temperature range.

According to the present exemplary embodiment, when the support material satisfies the above configuration, there is provided a support material capable of forming a three-dimensional structure having excellent shape accuracy.

Estimation mechanism exhibited by this effect is inferred as follows.

In the related art, the formation of a three-dimensional structure has been performed by an inkjet type ejection head using a radiation-curable model material and a radiation-curable support material. For example, a model material is ejected by ink jet and cured by irradiation with radioactive rays to form a structure, and a support material is ejected by ink jet and cured by irradiation with radioactive rays to form a support structure, so as to form a structure having a targeted shape, and then the support structure is removed, thereby obtaining a three-dimensional structure.

Here, the support material for ink jet is required to have viscosity to such a degree that the support material can be ejected from the ejection head at a temperature (generally, a temperature of 45°C to 85°C) at the time of ejecting the support material by the ejection head. On the other hand, from the viewpoint of precisely forming a support structure having a desired shape by the support material, it is required to suppress the movement of the support material from the ejected position until the support material is cured by irradiation with radioactive rays after the support material is ejected from the ejection head.

In contrast to this, the support material for ink jet according to the present exemplary embodiment contains a polyglycerin-based compound selected from the above group. Therefore, even when the support material has fluidity of low viscosity to such a degree that the support material can be ejected from the ejection head at the time of ejecting the support material, after the ejection of the support material, the temperature of the support material is lowered, and thus the viscosity thereof is increased, so as to decrease the fluidity thereof. Accordingly, the movement of the support material from the ejected position is reduced, and thus the movement of the support material is prevented until the support material is cured by irradiation with radioactive rays, so as to form a support structure having excellent shape accuracy. As a result, since the support structure is excellent in shape accuracy, a three-dimensional structure to be formed using the support material according to the present exemplary embodiment together with a model material is realized to have excellent shape accuracy.

Further, the support material according to the present exemplary embodiment containing a radiation-curable compound and a polyglycerin-based compound selected from the above group exhibits excellent curability by irradiation with radioactive rays. Since the melting temperature of the support material is increased after the support material is cured by irradiation with radioactive rays compared to before the support material is cured by irradiation with radioactive rays, lamination is further performed on the support structure after the curing to form the next support structure. Therefore, even in the case where the support material is further ejected after the curing to be landed, the deformation of the support structure due to the heat caused by the ejection of the support material is less likely to occur. Accordingly, a support structure excellent in shape accuracy is formed.

The support material is required to have removability after forming the support structure, that is, after curing the support material. In contrast to this, in the present exemplary embodiment, the support material contains a hot water-soluble radiation-curable compound and a polyglycerin-based compound selected from the above group. Since the hot water-soluble radiation-curable compound exhibits solubility in hot water and the polyglycerin-based compound is also a compound that can be dissolved in hot water, when hot water is used at the time of removing the support structure, the support structure is dissolved in hot water, and thus the support structure can be easily removed.

Hereinafter, components of the support material according to the present exemplary embodiment will be described in detail.

The support material according to the present exemplary embodiment contains a hot water-soluble radiation-curable compound and a polyglycerin-based compound. The support material may contain other additives, such as a plasticizer, a radiation polymerization initiator, a polymerization inhibitor, a surfactant, and a colorant, in addition to the above components.

### (Hot water-soluble radiation-curable compound)

The radiation-curable compound is a compound which is cured (polymerized) by radioactive rays (for example, ultraviolet rays and electron beams). The radiation-curable compound may be a monomer, and may also be an oligomer.

The "hot water solubility" means that the compound cured after irradiation with radioactive rays exhibits solubility in hot water of the aforementioned temperature range.

As the radiation-curable compound, compounds having a radiation-curable functional group (radiation-polymerizable functional group) are exemplified. Examples of the radiation-curable functional group include ethylenically unsaturated double bonds (for example, an N-vinyl group, a vinyl ether group, and a (meth)acryloyl group), an epoxy group, and an oxetanyl group. Among these compounds, a compound having an ethylenically unsaturated double bond (for example, an acryloyl group) is preferable.

Examples of the hot water-soluble radiation-curable compound include hydroxyethyl (meth)acrylate (CH₂=C(-R)-C(=O)-CH₂CH₂OH/ R: hydrogen or a methyl group), (meth)acrylamide (CH₂=C(-R)-C(=O)-NH₂/ R: hydrogen or a methyl group), hydroxyethyl (meth)acrylamide (CH₂=C(-R)-C(=O)-NH-CH₂CH₂OH/ R: hydrogen or a methyl group), (meth)acryloyl morpholine, acrylic acid (CH₂=CH-C(=O-OH), methoxytriethylene glycol acrylate, methoxypolyethylene glycol acrylate, and methoxypolyoxyethylene glycol acrylate.

Among these, from the viewpoints of improving ejectability by an inkjet method at low viscosity at the time of ejection, easily performing the curing by irradiation with radioactive rays, and improving removability using hot water after the curing, hydroxyethyl (meth)acrylate, (meth)acrylamide, (meth)acryloyl morpholine, acrylic acid, methoxytriethylene glycol acrylate, and methoxypolyethylene glycol acrylate are preferable, and hydroxyethyl (meth)acrylate is more preferable.

In the present specification, (meth)acylate means both acrylate and methacrylate. Further, (meth)acryloyl means both acryloyl group and methacryloyl group.

### Viscosity of radiation-curable compound

The viscosity (23°C) of the radiation-curable compound is preferably 5 mPa·s to 80 mPa·s, more preferably 8 mPa·s to 60 mPa·s, and further more preferably 10 mPa·s to 50 mPa·s.

The viscosity may be measured according to the measurement method using RHEOMAT 115 (manufactured by Contraves) to be described later.

### Content of radiation-curable compound

The content of the radiation-curable compound is preferably 40% by weight to 80% by weight, and more preferably 45% by weight to 65% by weight, with respect to the total amount of the support material.

### (Polyglycerin-based compound)

The support material according to the present exemplary embodiment contains at least one polyglycerin-based compound selected from the group consisting of fatty acid esters of polyglycerin, ethylene oxide adducts of polyglycerin, and polypropylene oxide adducts of polyglycerin.

As the polyglycerins in the fatty acid esters of polyglycerin, polygylcerins obtained by polymerization of two glycerin molecules to twenty glycerin molecules are preferable, and examples thereof include diglycerin, triglycerin, tetraglycerin, pentaglycerin, hexaglycerin, heptaglycerin, octaglycerin, nonaglycerin, decaglycerin, undecaglycerin, and dodecaglycerin. Among these polygylcerins, tetraglycerin, hexaglycerin, or decaglycerin is preferable.

As the fatty acid, fatty acids of 16 carbon atoms to 20 carbon atoms are preferable, and examples thereof include saturated fatty acids, such as palmitic acid, stearic acid, and arachidic acid.

As the polyglycerins in the ethylene oxide adducts of polyglycerin and polypropylene oxide adducts of polyglycerin, the above polyglycerins in the fatty acid esters of polyglycerin are preferably exemplified.

Ethylene oxide or propylene oxide is added in an amount of preferably 60 mol to 120 mol, and more preferably 80 mol to 100 mol.

The polyglycerin-based compound may be used alone or as a combination of two or more.

As examples of combinations of two or more, mixtures of fatty acid esters of polyglycerin with ethylene oxide adducts of polyglycerin or polypropylene oxide adducts of polyglycerin are exemplified. Specifically, a mixture of stearic acid ester of polyglycerin (for example, stearic acid ester of decaglycerin) with ethylene oxide adduct of polyglycerin (for example, ethylene oxide adduct of diglycerin) is exemplified.

In the case where fatty acid esters of polyglycerin (a) is used in combination with ethylene oxide adducts of polyglycerin or polypropylene oxide adducts of polyglycerin (b), the weight ratio thereof (a:b) is in a range of preferably 70:30 to 90:10, and more preferably 75:25 to 85:15.

The HLB value of the polyglycerin-based compound (Hydrophile Lipophile Balance/ the HLB value of a mixture thereof in the case where two or more kinds of polyglycerin-based compound are used as a combination thereof) is preferably 7 to 13, and more preferably 8 to 12. When the HLB value thereof is 7 or more, the solubility of the support material in hot water is improved. Further, when the HLB value thereof is 13 or less, the performance in increase of viscosity of the support material after the ejection of the support material from the ejection head is further increased, and thus the shape accuracy of the support structure is further improved.

### Viscosity of polyglycerin-based compound

It is preferable that the polyglycerin-based compound is solid at room temperature (23°C).

The temperature at the time of ejecting the support material by an inkjet type ejection head is 70°C, and the viscosity of the polyglycerin-based compound at this temperature is preferably 200 mPa·s to 1500 mPa·s, more preferably 400 mPa·s to 1200 mPa·s, and further more preferably 600 mPa·s to 1000 mPa·s.

The viscosity may be measured according to the measurement method using RHEOMAT 115 (manufactured by Contraves) to be described later.

### Content of polyglycerin-based compound

The content of the polyglycerin-based compound (the total content thereof in the case where two or more kinds of polyglycerin-based compound are used as a combination thereof) is preferably 5% by weight to 45% by weight, more preferably 10% by weight to 35% by weight, and further more preferably 15% by weight to 30% by weight, with respect to the total amount of the support material.

### (Plasticizer)

The support material according to the present exemplary embodiment may further contain a plasticizer.

As the plasticizer, a non-radiation-curable polymer is exemplified. The non-radiation-curable polymer refers to a polymer in which a curing (polymerization) reaction is not caused by radiation (for example, ultraviolet rays or electron beams).

The non-radiation-curable polymer is preferably at least one selected from the group consisting of polyether polyols, castor oil polyols, and polyester polyols.

### Polyether polyols

Examples of polyether polyols include polymers of polyhydric alcohols, adducts of polyhydric alcohols and alkylene oxide, and ring-opening polymers of alkylene oxide.

Examples of polyhydric alcohols include ethylene glycol, diethylene glycol, propylene glycol, dipropylene glycol, 1,4-butanediol, 1,3-butanediol, neopentyl glycol, 1,6-hexanediol, 1,2-hexanediol, 3-methyl-1,5-pentanediol, 2-butyl-2-ethyl-1,3-propanediol, 2,4-diethyl-1,5-pentanediol, 1,8-octanediol, 1,9-nonanediol, 2-methyl-1,8-octanediol, 1,8-decanediol, octadecane diol, glycerin, trimethylol propane, pentaerythritol, and hexanetriol.

Examples of alkylene oxide include ethylene oxide, propylene oxide, butylene oxide, styrene oxide, epichlorohydrin, and tetrahydrofuran.

### Castor oil polyols

Examples of castor oil polyols include modified castor oil obtained by modifying castor oil with polyhydric alcohols, and modified castor oil fatty acids obtained by modifying castor oil fatty acids (fatty acids obtained from castor oil) with polyhydric alcohols.

Examples of polyhydric alcohols include the polyhydric alcohols exemplified in the description of polyether polyols.

The hydroxyl value in the castor oil polyol is preferably 100 mgKOH/g to 300 mgKOH/g, and more preferably 130 mgKOH/g to 200 mgKOH/g.

### Polyester polyols

Examples of polyester polyols include reaction products of polyhydric alcohols and dibasic acids and ring-opening polymers of cyclic ester compounds.

Examples of polyhydric alcohols include the polyhydric alcohols exemplified in the description of polyether polyols.

Examples of dibasic acids include carboxylic acids (for example, succinic acid, adipic acid, sebacic acid, dimer acid, maleic acid, phthalic acid, isophthalic acid, and terephthalic acid) and anhydrides of carboxylic acids.

Examples of cyclic ester compounds include ε- caprolactone and β-methyl-δ-valerolactone.

Here, the non-radiation-curable polymer, together with the above-mentioned various polyols, may be used in combination with polyhydric alcohols. In particularly, polyhydric alcohols may be used in combination with polyester polyols. That is, as the non-radiation-curable polymer, mixtures of polyester polyols and polyhydric alcohols are exemplified.

The content of polyhydric alcohols used in combination with the above-mentioned various polyols may be 30% by weight to 60% by weight (preferably 35% by weight to 50% by weight) with respect to the total amount of the radiation-curable polymer. Particularly, in the case where a mixture of polyester polyol and polyhydric alcohol is used, the ratio thereof (polyester polyol/polyhydric alcohol) may be 30/70 to 10/90 (preferably 25/75 to 20/80).

Examples of polyhydric alcohols include the polyhydric alcohols exemplified in the description of polyether polyols.

### Weight average molecular weight of non-radiation-curable polymer

The weight average molecular weight of the non-radiation-curable polymer is preferably 200 to 1,000, and more preferably 250 to 850.

The weight average molecular weight of the non-radiation-curable polymer is a value measured by gel permeation chromatography (GPC) in which polystyrene is used as a standard material.

### Viscosity of non-radiation-curable polymer

The viscosity (25°C) of the non-radiation-curable polymer is preferably 200 mPa·s or less, more preferably 100 mPa·s or less, and further more preferably 70 mPa·s or less.

The viscosity may be measured according to the measurement method using RHEOMAT 115 (manufactured by Contraves) to be described later.

### Content of plasticizer

The content of the plasticizer is preferably 25% by weight to 60% by weight, more preferably 30% by weight to 55% by weight, and further more preferably 35% by weight to 50% by weight, with respect to the total amount of the support material.

The plasticizer may be used alone or as a combination of two or more kinds thereof.

### (Radiation polymerization initiator)

As the radiation polymerization initiator, well-known polymerization initiators, such as a radiation radical polymerization initiator and a radiation cationic polymerization initiator, are exemplified.

Examples of the radiation radical polymerization initiator include aromatic ketones, acylphosphine oxide compounds, aromatic onium salt compounds, organic peroxides, thio compounds (thioxanthone compounds, thiophenyl group-containing compounds, and the like), hexaarylbiimidazole compounds, ketoxime ester compounds, borate compounds, azinium compounds, metallocene compounds, active ester compounds, compounds having a carbon-halogen bond, and alkyl amine compounds.

Specific examples of the radiation radical polymerization initiator include well-known radiation polymerization initiators, such as acetophenone, acetophenone benzyl ketal, 1-hydroxy phenyl ketone, 2,2-dimethoxy-2-phenyl acetophenone, xanthone, fluorenone, benzaldehyde, fluorene, anthraquinone, triphenylamine, carbazole, 3-methylacetophenone, 4-chloro benzophenone, 4,4'-dimethoxy benzophenone, 4,4'-diamino benzophenone, Michler's ketone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethyl thioxanthone, 2-isopropyl thioxanthone, 2-chloro thioxanthone, 2-methyl-1-[4-(methylthio)phenyl]-2-morpholino-propan-1-one, bis(2,4,6-trimethylbenzoyl)-phenylphosphine oxide, 2,4,6-trimethylbenzoyl-diphenyl-phosphine oxide, 2,4-diethyl thioxanthone, and bis-(2,6-dimethoxybenzoyl)-2,4,4-trimethylpentyl phosphine oxide.

### Content of radiation polymerization initiator

The content of the radiation polymerization initiator is preferably 1% by weight to 10% by weight, and more preferably 3% by weight to 5% by weight, with respect to the radiation-curable compound.

The radiation polymerization initiator may be used alone or as a combination of two or more kinds thereof.

### (Polymerization inhibitor)

Examples of the polymerization inhibitor include well-known polymerization inhibitors, such as phenol-based polymerization inhibitors (for example, p-methoxyphenol, cresol, t-butylcatechol, 3,5-di-t-butyl-4-hydroxytoluene, 2,2'-methylene-bis(4-methyl-6-t-butylphenol), 2,2'-methylene-bis(4-ethyl-6-butylphenol), 4,4'-thio-bis(3-methyl-6-t-butylphenol), and the like), hindered amine, hydroquinone monomethyl ether (MEHQ), and hydroquinone.

### Content of polymerization inhibitor

The content of the polymerization inhibitor is preferably 0.1% by weight to 1% by weight, and more preferably 0.3% by weight to 0.5% by weight, with respect to the radiation-curable compound.

The polymerization inhibitor may be used alone or as a combination of two or more kinds thereof.

### (Surfactant)

Examples of the surfactant include well-known surfactants, such as silicone-based surfactants, acrylic surfactants, cationic surfactants, anionic surfactants, nonionic surfactants, amphoteric surfactants, and fluorine-based surfactants.

### Content of surfactant

The content of the surfactant is preferably 0.05% by weight to 0.5% by weight, and more preferably 0.1% by weight to 0.3% by weight, with respect to the radiation-curable compound.

The surfactant may be used alone or as a combination of two or more kinds thereof.

### (Other additives)

Examples of other additives, in addition to the above additives, include well-known additives, such as a colorant, a solvent, a sensitizer, a fixing agent, a fungicide, a preservative, an antioxidant, an ultraviolet absorber, a chelating agent, a thickener, a dispersant, a polymerization accelerator, a penetration enhancer, and a wetting agent (humectant).

### (Characteristics of support material)

The surface tension of the support material is in a range of 20 mN/m to 40 mN/m.

Here, the surface tension is a value measured by a Wilhelmy type surface tension meter (manufactured by Kyowa Interface Science Co., Ltd.) under an environment of a relative humidity (RH) of 55% at 23°C.

The viscosity (23°C) of the support material is in a range of 30 mPa·s to 50 mPa·s.

The temperature at the time of ejecting the support material by an inkjet type ejection head is 70°C, and the viscosity of the support material at this temperature is preferably 5 mPa·s to 20 mPa·s, more preferably 8 mPa·s to 18 mPa·s, and further more preferably 10 mPa·s to 15 mPa·s.

The viscosity is a value measured by using RHEOMAT 115 (manufactured by Contraves) as a measurement device and setting measurement temperature to the above temperature under a condition of a shear rate of 1400 s-1.

### (Model material)

Hereinafter, the model material will be described.

The model material contains a radiation-curable compound (radiation-curable compound for model material). The model material may further contain other additives, such as a radiation polymerization initiator, a polymerization inhibitor, a surfactant, and a colorant, in addition to the above-mentioned components.

As the radiation-curable compound used for the model material (radiation-curable compound for model material), compounds having a radiation-curable functional group (radiation-polymerizable functional group) are exemplified. Examples of the radiation-curable functional group include ethylenically unsaturated double bonds (for example, an N-vinyl group, a vinyl ether group, and a (meth)acryloyl group), an epoxy group, and an oxetanyl group. As the radiation-curable compound, a compound having an ethylenically unsaturated double bond group (preferably, a (meth)acryloyl group) is preferable.

Specific examples of the radiation-curable compound for the model material include urethane (meth) acrylate, epoxy (meth)acrylate, and polyester (meth)acrylate. Among these, urethane (meth) acrylate is preferable as the radiation-curable compound for the model material.

The content of the radiation-curable compound for the model material is preferably 90% by weight to 99% by weight, and more preferably 93% by weight to 97% by weight, with respect to the total amount of the model material.

Particularly, in the radiation-curable compound for the model material, it is preferable that urethane (meth)acrylate is used in combination with another radiation-curable compound (for example, monofunctional or multifunctional (meth)acrylate). In this case, the content of urethane (meth)acrylate is preferably 10% by weight to 60% by weight, and more preferably 20% by weight to 50% by weight, with respect to the total amount of the model material. Further, the content of the above another radiation-curable compound is preferably 40% by weight to 75% by weight, and more preferably 50% by weight to 65% by weight, with respect to the total amount of the model material.

The radiation-curable compound for the model material may be used alone or as a combination of two or more kinds thereof.

As the radiation polymerization initiator, polymerization inhibitor, surfactant, and colorant, which are used for the model material, the components exemplified in the support material can be used. The characteristics of the model material also are exemplified in the same range as the characteristics of the support material.

### (Method of manufacturing three-dimensional structure)

Through the three dimension forming apparatus 10 according to the present exemplary embodiment, a method of manufacturing a three-dimensional structure, including the steps of: ejecting a radiation-curable model material by an inkjet method and curing the ejected radiation-curable model material by irradiation with radioactive rays to form a three-dimensional structure; and ejecting a support material by an inkjet method and curing the ejected support material by irradiation with radioactive rays to form a support structure supporting at least a part of the three-dimensional structure, is carried out. In the method of manufacturing a three-dimensional structure according to the present exemplary embodiment, after the three-dimensional structure is formed, the support structure is removed by dissolving the support structure in hot water of 40°C to 90°C (preferably 60°C to 90°C, and more preferably 60°C to 80°C), so as to form the three-dimensional structure.

Specifically, a method of dipping a three-dimensional structure having a support structure into hot water and thus dissolving the support structure to remove the support structure (dipping method), a method of injecting hot water to a three-dimensional structure having a support structure and thus dissolving the support structure to remove the support structure by water pressure (injection method), or the like is employed. In terms of a simple removal method, the removal of the support structure by the dipping method is more preferable. In the dipping method, ultrasonic irradiation is also preferably used.

The obtained structure may be subjected to post-treatment, such as abrasion treatment.

The three dimension forming apparatus 10 may be provided with a model material cartridge accommodating the model material and detachably attached to the three dimension forming apparatus 10. Similarly, the three dimension forming apparatus 10 may be provided with a support material cartridge accommodating the support material and detachably attached to the three dimension forming apparatus 10.

Hereinafter, the present invention will be described in more detail with reference to Examples.

However, the present invention is not limited to these Examples. Here, "parts" are based on weight, unless otherwise specified.

### (Example 1)

### Support material SA1

### Preparation of polyglycerin-based compound 1

80 parts of decaglycerin tristearate and 20 parts of diglycerin-ethylene oxide 100 mol adduct are heated and stirred from 100°C to 200°C until they are melted, and the molten product is cooled to room temperature (25°C), so as to obtain polyglycerin-based compound 1 having a HLB value of 10.

### Preparation of support material SA1

Hydroxyethyl acrylate (HEA): 100 parts
(hot water-soluble UV-curable compound)
Castor oil polyol: 50 parts
(plasticizer, "URIC H-31" manufactured by ITOH OIL CHEMICALS CO., LTD., hydroxyl value: 157 mgKOH/g to 170 mgKOH/g, viscosity (25°C): 40 mPa·s or less)
Polyglycerin-based compound 1:50 parts
Polymerization initiator: 5.0 parts
("DAROCUR 1173" manufactured by BASF Corporation, 2-hydroxy-2-methyl-1-phenylpropan-1-one)
Polymerization inhibitor: 0.5 parts
("GENORAD 16" manufactured by Rahn AG Corporation)

The above components are mixed with each other, so as to prepare support material SA1.

### (Example 2)

Support material is obtained in the same manner as in Example 1, except that the polyglycerin-based compound 1 used in Example 1 is changed to polyglycerin-based compound 2 prepared as follows.

### Preparation of polyglycerin-based compound 2

20 parts of decaglycerin tristearate and 80 parts of diglycerin-ethylene oxide 100 mol adduct are heated and stirred from 100°C to 200°C until they are melted, and the molten product is cooled to room temperature (25°C), so as to obtain polyglycerin-based compound 2 having a HLB value of 9.5.

### (Example 3)

Support material is obtained in the same manner as in Example 1, except that the hydroxyethyl acrylate (HEA) used in Example 1 is changed to acryloyl morpholine.

### (Example 4)

Support material is obtained in the same manner as in Example 1, except that the plasticizer (castor oil, URIC H-31) used in Example 1 is changed to polyester polyol (P-400, manufactured by ADEKA CORPORATION)

### (Comparative Example 1)

Support material is obtained in the same manner as in Example 1, except that the hydroxyethyl acrylate (HEA), polymerization initiator (DAROCUR 1173), and polymerization inhibitor (GENORAD 16) in Example 1 are not used.

### (Comparative Example 2)

Support material is obtained in the same manner as in Example 1, except that the polyglycerin-based compound 1 in Example 1 is not used.

### (Comparative Example 3)

Support material is obtained in the same manner as in Example 3, except that the polyglycerin-based compound 1 in Example 3 is not used.

### (Comparative Example 4)

Support material is obtained in the same manner as in Example 4, except that the polyglycerin-based compound 1 in Example 4 is not used.

### (Comparative Example 5)

Support material is obtained in the same manner as in Example 1, except that the polyglycerin-based compound 1 in Example 1 is changed to an ethylene-vinyl acetate copolymer (trade name: 701D, manufactured by Moribe Stores Inc.).

### (Evaluation)

### Evaluation of inkjet ejection applicability

The inkjet ejection applicability of support material is evaluated by measuring viscosity.

The viscosity at 70°C is measured by RHEOMAT 115 (manufactured by Contraves) under a condition of a shear rate of 1400 s-1.

Evaluation criteria are as follows.

### Evaluation criteria

A (○): 15 mPa·s or less
B (Δ): more than 15 mPa·s and 30 mPa·s or less
C (X): more than 30 mPa·s

### Evaluation of shape accuracy (resolution)

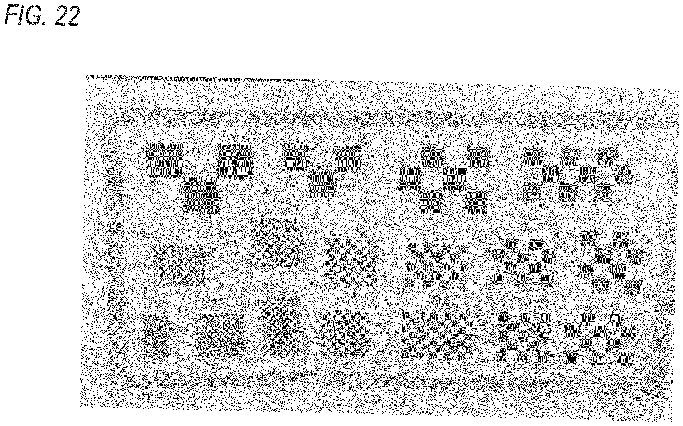

A resolution pattern having a modeling pattern in which square projection portions (height: 0.5 mm) of 4 mm, 3 mm, 2.5 mm, 2 mm, 1.8 mm, 1.5 mm, 1.4 mm, 1.2 mm, 1.0 mm, 0.8 mm, 0.6 mm, 0.5 mm, 0.45 mm, 0.4 mm, 0.35 mm, 0.3 mm, and 0.25 mm are respectively arranged in the form of a grid (refer to Fig. 22) is prepared.

POLARIS head (model number: PQ512/85), manufactured by Fujifilm Dimatrix Inc., is selected as an inkjet head, SUBZERO-055 (intensity of 100 w/cm), manufactured by INTEGRATION TECHNOLOGY LTD., is selected as an ultraviolet irradiation light source, they are provided in a forming apparatus including a drive unit and a control unit, and this forming apparatus is used as a forming apparatus for test. In the forming apparatus, the inkjet head and the light source are reciprocally moved together, support material layers having a thickness of 20 µm are laminated, and curing treatment are performed by ultraviolet irradiation for each scanning once, so as to form a support structure by the support material. Further, in the forming apparatus, the support material passes through a Profile Star A050 filter (filtration accuracy 5 µm), manufactured by NIHON PALL LTD., via a TYGON 2375 chemical-resistant tube, manufactured by SAINT-GOBAIN TM K.K., from a storage tank by a feed pump under a light-blocking condition, so as to remove foreign materials from the support material, and then the resulting support material is supplied to the inkjet head.

The resolution pattern is scanned by the above forming apparatus to form a support structure pattern.

The shape accuracy (resolution) is evaluated by whether the support structure pattern can be resolved to such a degree of size.

### Evaluation of hot water removability

The support structure pattern formed in the evaluation of shape accuracy (resolution) is dipped into hot water of 60°C.

The hot water removability is evaluated by whether or not the support structure pattern is dissolved.

### Evaluation criteria

A (O): the support structure pattern is dissolved and solids are disappeared within 5 minutes
B (Δ): the support structure pattern is dissolved, but it takes more than 30 minutes for solids to disappear
C (X): the support structure pattern is not dissolved, and solids remain Table 1

| | Examples | | | | Comparative Examples | | | | |
|---|---|---|---|---|---|---|---|---|---|
| | 1 | 2 | 3 | 4 | 1 | 2 | 3 | 4 | 5 |
| Inkjet ejection applicability | A(○) | A(○) | A(○) | B(Δ) | B(Δ) | A(○) | A(○) | A(○) | A(○) |
| Shape accuracy (resolution) | 0.35 mm | 0.4 mm | 0.35 mm | 0.3 mm | 0.8 mm | 1.5 mm | 1.5 mm | 1 mm | 0.4 mm |
| Hot water removability | A(○) | A(○) | A(○ | A(○) | B(Δ) | B(Δ) | A(○) | B(Δ) | C(×) |

From the results of Table 1, it is found that, in Examples in each which a support material containing a hot water-soluble radiation-curable compound and a specific polyglycerin-based compound is used, the shape accuracy of a support structure to be formed is excellent, compared to Comparative Examples 2, 3, and 4 in each which a support material does not contain polyglycerin-based compound.

### Viscosity adjustment of support material

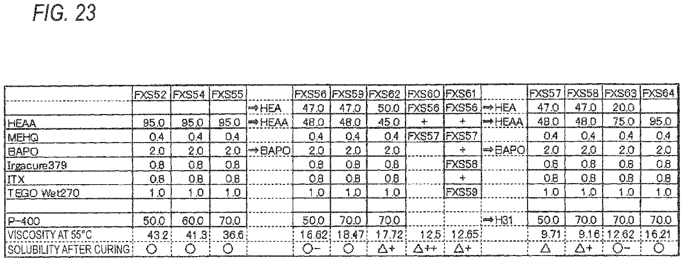

Hereinafter, the experimental results of viscosity adjustment of support material will be described. Fig. 23 shows the results of evaluating the viscosity of the support material at 55°C (temperature of ejection head) and the solubility of the support material after UV curing, with regard to the composition of the plurality of patterns. Evaluation criteria are as follows.

### Evaluation criteria

O: support material is dissolved (within 1 minute with ultrasonic treatment)
O-: it takes time to dissolve support material (3 minutes to 5 minutes with ultrasonic treatment)
Δ++: insoluble mater remains immediately after dissolution, but is dissolved after a while
Δ+: insoluble mater remains immediately after dissolution, but is dissolved overnight
Δ: support material breaks apart, but is not dissolved

It is found that, when the viscosity and solubility of the composition FXS 52 in which HEA is replaced by HEAA (hydroxyethyl acrylamide) are evaluated with reference to the composition FXS 49 containing hydroxyethyl acrylate (HEA), hydroquinone momomethyl ether (MEHQ), bisacylphosphine oxide (BAPO), IRGACURE 379 (2-dimethylamino-2-(4-methylbenzyl)-1-(4-morpholin-4-yl-phenyl)-butan-1-one), manufactured by BASF Corporation), ITX (2-isopropylthioxanthone), TEGO WET270 (polyether-modified siloxane copolymer, manufactured by Evonik Japan), and P-400 (polyester polyol), the composition FXS 52 is dissolved in a short period of time by ultrasonic application after UV curing.

HEAA has very high viscosity due to the hydrogen bond of an internal amide group thereof, and has high shape holding properties after curing. The viscosity of HEAA at 55°C (temperature of ejection head) is 43.2 mPa·s, which is high, is not sufficiently lowered even though the amount of P-400, which is a non-UV-curable component, is increased. The reason for this is that the original viscosity of P-400 at 55°C is 17 mPa·s. Thus, there is an attempt to lower the viscosity of HEAA by using low-viscosity monofunctional monomer HEA or OH-modified castor oil (H31), which is a low-viscosity non-UV-curable component, until HEAA can be used in an inkjet method.

As shown in Fig. 23, in the viscosity adjustment with HEA and H31, trade-off relationship between solubility and viscosity in water occurs, and the composition FXS 63 is a barely acceptable level of composition.

Thus, a water-soluble support material composition, which is water soluble after UV curing and which has viscosity capable of being ejected by an inkjet method, is found. As the requirements necessary for the water-soluble support material, the following four points are exemplified.
(1) 50 wt% or more of non-UV-curable component is needed.
(2) di- or more functional reaction components are not used.
(3) mono-functional monomer having high sensitivity is selected, and cross-linking reactions caused by side reactions are prevented.
(4) polymer after UV curing and non-UV-curable component are phase-separated from each other and combined with each other.

A thermal fusible support material may be used without the water-soluble support material. Examples of the thermal fusible support material include water-soluble wax of powder liquefied by heating and solidified by natural cooling, and urea powder.

In each of the above exemplary embodiments, a case where the modeling platform 34 gradually descends in the Z-axis direction while the model material ejection head 16 scans the XY plane has been described. However, the model material ejection head 16 may gradually ascend in the Z-axis direction while scanning the XY plane in a state in which the modeling platform 34 is fixed. Further, both the modeling platform 34 and the model material ejection head 16 may be moved so as to be separated in the Z-axis direction.

The configuration of the three dimension forming apparatus 10 having been described in each of the above exemplary embodiments (refers to Fig. 1) is an example.

## Claims

1. A three-dimension forming apparatus (10), comprising:
a model material ejection unit (16) for ejecting a model material (66);
a support material ejection unit (20) for ejecting a support material (68); and
a controller (12) arranged to control the model material ejection unit (16) and the support material ejection unit (20) such that the model material (66) and the support material (68) are arranged as a support structure (42) in an arrangement pattern containing the model material and the support material, the support structure supporting or protecting a three-dimensional structure (40) to be formed by the model material and formed by laminating layers containing the model material and the support material in a height direction of the three-dimensional structure, the arrangement pattern being a pattern of the model material and the support material of each of the layers, wherein:
the arrangement pattern is a gradation-like pattern in which, as the support structure (42) is positioned closer to the three-dimensional structure (40), the rate of the support material (68) in the support structure (42) increases, wherein the rate of the support material is the amount of the support material (68) per unit area, and, as the support structure is more distant from the three-dimensional structure, the rate of the model material (66) in the support structure (42) increases, wherein the rate of model material is the amount of the model material (66) per unit area; and
the controller (12) is arranged to control the model material ejection unit (16) and the support material ejection unit (20) based on the arrangement pattern set such that the layers which have different arrangement patterns are adjacent to each other in a height direction of the three-dimensional structure.

2. The three-dimension forming apparatus (10) according to any one of claim 1,
wherein the controller (12) is arranged to determine a height required for the support structure (42) from modelling data of the three-dimensional structure (40) for each of a plurality of segmented regions obtained by segmenting a projection region obtained by projecting the three-dimensional structure in the height direction, and to control the model material ejection unit (16) and the support material ejection unit (20) such that the model material (66) and the support material (68) are arranged as the support structure having the height in the arrangement pattern.

3. The three-dimension forming apparatus (10) according to any one of claims 1 to 2,
wherein the support material (68) is water-soluble or thermal-fusible.

4. A three-dimension forming method, comprising:
controlling ejection of a model material (66) and a support material (68) such that the model material and the support material are arranged as a support structure (42) in an arrangement pattern containing the model material and the support material, the support structure supporting or protecting a three-dimensional structure (40) to be formed by the model material and formed by laminating layers containing the model material and the support material in a height direction of the three-dimensional structure, the arrangement pattern being a pattern of the model material and the support material of each of the layers, wherein:
the arrangement pattern is a gradation-like pattern in which, as the support structure (42) is positioned closer to the three-dimensional structure (40), the rate of the support material (68) in the support structure (42) increases, wherein the rate of the support material is the amount of the support material (68) per unit area , and, as the support structure is more distant from the three-dimensional structure, the rate of the model material (66) in the support structure (42) increases, wherein the rate of model material is the amount of the model material 66 per unit area , and
said controlling controls the ejection of the model material (66) and the support material (68) based on the arrangement pattern set such that the layers which have different arrangement patterns are adjacent to each other in a height direction of the three-dimensional structure.

5. A three-dimension forming program comprising instructions to cause the device of claim 1 to execute the steps of the method of claim 4.

6. The three-dimension forming apparatus (10) according to any one of claims 1 to 3, further comprising: a model material accommodation unit (14) that accommodates a model material (66); and a support material accommodation unit (18) that accommodates a support material (68).

7. The three-dimension forming apparatus (10) according to any of claims 1 to 3 or of claim 6, wherein the model material (66) contains a radiation-curable compound.

8. The three-dimension forming apparatus (10) of claim 6, wherein the support material (68) contains a hot water-soluble radiation-curable compound and a polyglycerin-based compound selected from the group consisting of fatty acid esters of polyglycerin, ethylene oxide adducts of polyglycerin, and polypropylene oxide adducts of polyglycerin.

## Patentansprüche

1. Vorrichtung (10) zur dreidimensionalen Formung, umfassend:
eine Modellmaterialauswurfeinheit (16) zum Auswerfen eines Modellmaterials (66);
eine Trägermaterialauswurfeinheit (20) zum Auswerfen eines Trägermaterials (68); und
eine Steuerung (12), die dazu ausgelegt ist, die Modellmaterialauswurfeinheit (16) und die Trägermaterialauswurfeinheit (20) derart steuern, dass das Modellmaterial (66) und das Trägermaterial (68) als Trägerstruktur (42) in einem Anordnungsmuster angeordnet werden, das das Modellmaterial und das Trägermaterial enthält, wobei die Trägerstruktur eine dreidimensionale Struktur (40) trägt oder schützt, die durch das Modellmaterial zu bilden ist und durch Laminieren von Schichten, die das Modellmaterial und das Trägermaterial enthalten, in einer Höhenrichtung der dreidimensionalen Struktur gebildet wird, wobei das Anordnungsmuster ein Muster des Modellmaterials und des Trägermaterials jeder der Schichten ist, wobei: das Anordnungsmuster ein graduierungsartiges Muster ist, bei dem, wenn die Trägerstruktur (42) näher an der dreidimensionalen Struktur (40) positioniert ist, die Rate des Trägermaterials (68) in der Trägerstruktur (42) zunimmt, wobei die Rate des Trägermaterials die Menge des Trägermaterials (68) pro Flächeneinheit ist, und, wenn die Trägerstruktur weiter von der dreidimensionalen Struktur entfernt ist, die Rate des Modellmaterials (66) in der Trägerstruktur (42) zunimmt, wobei die Rate des Modellmaterials die Menge des Modellmaterials (66) pro Flächeneinheit ist; und
die Steuerung (12) dazu ausgelegt ist, die Modellmaterialauswurfeinheit (16) und die Trägermaterialauswurfeinheit (20) basierend auf dem Anordnungsmuster zu steuern, das derart eingestellt wird, dass die Schichten, die unterschiedliche Anordnungsmuster aufweisen, in einer Höhenrichtung der dreidimensionalen Struktur nebeneinander liegen.

2. Vorrichtung (10) zur dreidimensionalen Formung nach Anspruch 1,
wobei die Steuerung (12) dazu ausgelegt ist, eine für die Stützstruktur (42) erforderliche Höhe aus Modellierungsdaten der dreidimensionalen Struktur (40) für jeden von mehreren segmentierten Bereichen zu bestimmen, die durch Segmentieren eines Projektionsbereichs erhalten werden, der durch Projizieren der dreidimensionalen Struktur in Höhenrichtung erhalten wird, und die Modellmaterialauswurfeinheit (16) und die Trägermaterialauswurfeinheit (20) derart zu steuern, dass das Modellmaterial (66) und das Trägermaterial (68) als die Trägerstruktur, die die Höhe aufweist, in dem Anordnungsmuster angeordnet sind.

3. Vorrichtung (10) zur dreidimensionalen Formung nach einem der Ansprüche 1 bis 2, wobei das Trägermaterial (68) wasserlöslich oder thermisch schmelzbar ist.

4. Verfahren zur dreidimensionalen Formung, umfassend:
Steuern des Auswurfs eines Modellmaterials (66) und eines Trägermaterials (68) derart, dass das Modellmaterial und das Trägermaterial als Trägerstruktur (42) in einem Anordnungsmuster angeordnet sind, das das Modellmaterial und das Trägermaterial enthält, wobei die Trägerstruktur eine dreidimensionale Struktur (40) trägt oder schützt, die durch das Modellmaterial zu bilden ist und die durch Laminieren von Schichten gebildet wird, die das Modellmaterial und das Trägermaterial in einer Höhenrichtung der dreidimensionalen Struktur enthalten, wobei das Anordnungsmuster ein Muster des Modellmaterials und des Trägermaterials jeder der Schichten, wobei:
das Anordnungsmuster ein graduierungsartiges Muster ist, bei dem, wenn die Trägerstruktur (42) näher an der dreidimensionalen Struktur (40) positioniert ist, die Rate des Trägermaterials (68) in der Trägerstruktur (42) zunimmt, wobei die Rate des Trägermaterials die Menge des Trägermaterials (68) pro Flächeneinheit ist, und, wenn die Trägerstruktur weiter von der dreidimensionalen Struktur entfernt ist, die Rate des Modellmaterials (66) in der Trägerstruktur (42) zunimmt, wobei die Rate des Modellmaterials die Menge des Modellmaterials (66) pro Flächeneinheit ist, und
die Steuerung das Auswerfen des Modellmaterials (66) und des Trägermaterials (68) basierend auf dem Anordnungsmustersatz derart steuert, dass die Schichten, die unterschiedliche Anordnungsmuster aufweisen, in einer Höhenrichtung der dreidimensionalen Struktur nebeneinander liegen.

5. Verfahren zur dreidimensionalen Formung, umfassend Anweisungen, um die Vorrichtung nach Anspruch 1 zu veranlassen, die Schritte des Verfahrens nach Anspruch 4 auszuführen.

6. Vorrichtung (10) zur dreidimensionalen Formung nach einem der Ansprüche 1 bis 3, ferner umfassend:
eine Modellmaterial-Aufnahmeeinheit (14), die ein Modellmaterial (66) aufnimmt; und
eine Trägermaterial-Aufnahmeeinheit (18), die ein Trägermaterial (68) aufnimmt.

7. Vorrichtung (10) zur dreidimensionalen Formung nach einem der Ansprüche 1 bis 3 oder nach Anspruch 6, wobei das Modellmaterial (66) eine durch Strahlung aushärtbare Verbindung enthält.

8. Vorrichtung (10) zur dreidimensionalen Formung nach Anspruch 6, wobei das Trägermaterial (68) eine durch heißes Wasser lösliche, durch Strahlung aushärtbare Verbindung und eine Verbindung auf Polyglycerinbasis enthält, die ausgewählt ist aus der Gruppe bestehend aus Fettsäureestern von Polyglycerin, Ethylenoxidaddukte von Polyglycerin und Polypropylenoxidaddukte von Polyglycerin.

## Revendications

1. Appareil de formage tridimensionnel (10), comprenant :
une unité d'éjection de matériau de modèle (16) pour éjecter un matériau de modèle (66) ;
une unité d'éjection de matériau de support (20) pour éjecter un matériau de support (68) ; et
un dispositif de commande (12) agencé pour commander l'unité d'éjection de matériau de modèle (16) et l'unité d'éjection de matériau de support (20) de telle sorte que le matériau de modèle (66) et le matériau de support (68) sont agencés sous la forme d'une structure de support (42) selon un motif d'agencement contenant le matériau de modèle et le matériau de support, la structure de support supportant ou protégeant une structure tridimensionnelle (40) devant être formée par le matériau de modèle et formée en stratifiant des couches contenant le matériau de modèle et le matériau de support dans une direction de hauteur de la structure tridimensionnelle, le motif d'agencement étant un motif du matériau de modèle et du matériau de support de chacune des couches, dans lequel :
le motif d'agencement est un motif de type gradation dans lequel, lorsque la structure de support (42) est positionnée plus proche par rapport à la structure tridimensionnelle (40), le débit du matériau de support (68) dans la structure de support (42) augmente, dans lequel le débit du matériau de support est la quantité du matériau de support (68) par unité de surface, et, comme la structure de support est plus éloignée de la structure tridimensionnelle, le débit du matériau de modèle (66) dans la structure de support (42) augmente, dans lequel le débit de matériau de modèle est la quantité de matériau de modèle (66) par unité de surface ; et
le dispositif de commande (12) est agencé pour commander l'unité d'éjection de matériau de modèle (16) et l'unité d'éjection de matériau de support (20) sur la base du motif d'agencement établi de sorte que les couches qui ont des motifs d'agencement différents sont adjacentes les unes aux autres dans une direction de hauteur de la structure tridimensionnelle.

2. Appareil de formage tridimensionnel (10) selon la revendication 1,
dans lequel le dispositif de commande (12) est agencé pour déterminer une hauteur requise pour la structure de support (42) à partir de données de modélisation de la structure tridimensionnelle (40) pour chacune d'une pluralité de régions segmentées obtenues en segmentant une région de projection obtenue en projetant la structure tridimensionnelle dans la direction de hauteur, et pour commander l'unité d'éjection de matériau de modèle (16) et l'unité d'éjection de matériau de support (20) de telle sorte que le matériau de modèle (66) et le matériau de support (68) sont agencés en tant que structure de support ayant la hauteur dans le motif d'arrangement.

3. Appareil de formage tridimensionnel (10) selon l'une quelconque des revendications 1 à 2,
dans lequel le matériau de support (68) est soluble dans l'eau ou thermofusible.

4. Procédé de formage tridimensionnel, comprenant les étapes consistant à :
commander une éjection d'un matériau de modèle (66) et d'un matériau de support (68) de telle sorte que le matériau de modèle et le matériau de support soient agencés sous la forme d'une structure de support (42) selon un motif d'agencement contenant le matériau de modèle et le matériau de support, la structure de support supportant ou protégeant une structure tridimensionnelle (40) devant être formée par le matériau de modèle et formée en stratifiant des couches contenant le matériau de modèle et le matériau de support dans une direction de hauteur de la structure tridimensionnelle, le motif d'agencement étant un motif du matériau de modèle et du matériau de support de chacune des couches, dans lequel :
le motif d'agencement est un motif de type gradation dans lequel, lorsque la structure de support (42) est positionnée plus proche de la structure tridimensionnelle (40), le débit du matériau de support (68) dans la structure de support (42) augmente, dans lequel le débit du matériau de support est la quantité du matériau de support (68) par unité de surface, et, comme la structure de support est plus éloignée de la structure tridimensionnelle, le débit du matériau de modèle (66) dans la structure de support (42) augmente, dans lequel le débit de matériau de modèle étant la quantité de matériau de modèle (66) par unité de surface, et
ladite étape de commande commande l'éjection du matériau de modèle (66) et du matériau de support (68) sur la base du motif d'agencement établi de sorte que les couches qui ont des motifs d'agencement différents sont adjacentes les unes aux autres dans une direction de hauteur de la structure tridimensionnelle.

5. Programme de formage tridimensionnel comprenant des instructions pour faire exécuter par le dispositif de la revendication 1 les étapes du procédé de la revendication 4.

6. Appareil de formage tridimensionnel (10) selon l'une quelconque des revendications 1 à 3, comprenant en outre : une unité de logement de matériau de modèle (14) qui reçoit un matériau de modèle (66) ; et une unité de logement de matériau de support (18) qui reçoit un matériau de support (68) .

7. Appareil de formage tridimensionnel (10) selon l'une quelconque des revendications 1 à 3 ou selon la revendication 6, dans lequel le matériau de modèle (66) contient un composé durcissable par rayonnement.

8. Appareil de formage tridimensionnel (10) selon la revendication 6, dans lequel le matériau de support (68) contient un composé durcissable par rayonnement soluble dans l'eau chaude et un composé à base de polyglycérine choisi dans le groupe comprenant des esters d'acides gras de polyglycérine, et les adduits d'oxyde d'éthylène de polyglycérine, et des adduits d'oxyde de polypropylène de polyglycérine.
